Europäisches Patentamt

European Patent Office

Office européen des brevets

(19)

(11) Publication number: **0 114 406**
**B1**

(12) # EUROPEAN PATENT SPECIFICATION

(45) Date of publication of patent specification: **01.04.87**

(51) Int. Cl.⁴: **G 03 B 35/20**

(21) Application number: **83113154.5**

(22) Date of filing: **27.12.83**

(54) **System of projecting three-dimensional images.**

(30) Priority: **27.12.82 US 453611**

(43) Date of publication of application:
**01.08.84 Bulletin 84/31**

(45) Publication of the grant of the patent:
**01.04.87 Bulletin 87/14**

(84) Designated Contracting States:
**CH DE FR GB LI NL**

(56) References cited:
**CH-A- 501 943**
**GB-A- 466 047**
**US-A-2 825 264**
**US-A-3 667 831**
**US-A-4 367 486**

(73) Proprietor: **Meacham, G.B. Kirby**
**3581 Traver Road**
**Shaker Heights Ohio 44122 (US)**

(72) Inventor: **Meacham, G.B. Kirby**
**3581 Traver Road**
**Shaker Heights Ohio 44122 (US)**

(74) Representative: **Prüfer, Lutz H., Dipl.-Phys.**
**Harthauser Strasse 25d**
**D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Customarily, stereoscopic projection involves projecting two images taken from different vantage points so that they overlap on the screen. The beholder views the screen through a device which assures that the right eye sees only the image taken from the right vantage point and the left eye sees only the image taken from the left vantage point. The beholder's brain interprets the differences in perspective of the two images and the beholder perceives depth in the scene. The device which assures that the beholder's left eye and right eye see, respectively, the left and right images typically takes the form of glasses or goggles, which must be worn close to the face.

These devices operate on either optical or time base principles. In optical based systems the projectors use either different color or different polarity light for each image, and the viewing device is fitted with colored or polarized filters which cause the correct image to pass to each eye and filter out most of the light of the incorrect image. Optical stereoscopic systems have the advantage of low cost viewing devices, but typically do not achieve complete image separation and in the case of colored filters can degrade image color. In time based systems a shutter mechanism in the projector alternately projects left and right eye images. A pair of shutters in the beholder's viewing, synchronized with the projector shutters, allow the left eye to see only the left eye image and the right eye only the right eye image. This approach gives very good image separation, but typically involves relatively complex and expensive viewers which must be connected by cables to a central control to operate the shutters in a synchronized manner.

The US—A—4,367,486, which is not a document published before priority date, discloses a three-dimensional imaging system comprising a camera and a CRT-display. The picture recorded by the camera is formed by an intensity control component placed between the object and the camera and including a first movable slit and a second stationary slit. The picture is then displayed by the CRT-display through a further movable slit which moves in synchronism with the movement of the first slit of the intensity control component.

The central feature of the invention as claimed in claims 1, 7, 10, 12, 14 and 15 is a time based method for projecting two or more images taken from different viewpoints in such a way that each of the beholder's eyes see an appropriate image to cause perception of a three-dimensional scene without use of closely-fitting goggles or glasses. An additional feature is that when more than two images are used, movement of the beholder's head causes a change in the images presented which closely simulates the change seen during head movement when the beholder is viewing the actual scene.

As herein illustrated, the invention resides in a system of projecting three-dimensional images comprising a screen, projection means arranged to project successive images on the screen, viewer means arranged in the line of sight of the beholder between the beholder and the screen embodying a mask forming a vertical slit movable transversely of the line of sight of the beholder at a rate such as to be synchronized with the frequency of the projected images and coordinated with the changing images to present each eye with a different image.

The requirement for a horizontally moving vertical slit between the beholder and the coordinated sequence of perspective views on the screen can, in principle, be met by a slit at any point between a plane close to the beholder's face to a plane close to the screen. Further, more than one slit and one set of coordinated image sequences can be combined to form a total scene. Rather than attempt to describe all possible combinations within the scope of this concept, two extreme cases, both of substantial practical importance, will be presented.

In the first case, a single sequence of perspective views is projected on a screen or on a cathode ray tube and each beholder looks at the screen through a viewer at a comfortable distance from his face, for example, 30.5 to 61 cm. The viewer contains a single horizontally-moving vertical slit synchronized with the images on the screen. This embodiment is particularly suited to theatrical applications in which a number of beholders watch the same large screen, each through his own viewer. Each then sees the scene in the same way and has access to the full sequence of perspective views presented by moving his head within the scope of the viewer. In the second case, the total scene is made up of a large number of small segments (for example, 100 to 200), each one comprised of a horizontally-oscillating slit and coordinated set of perspective views. The slits are typically close to the screen, on the order of 2.5 to 5.0 mm away. This embodiment is particularly adapted to small screens; either video or rear projected film with one or a small number of beholders. Not all viewing positions are equally good, hence, the small number of beholders accommodated. Since, however, the screen and viewer are almost in the same plane the beholder receives the impression that he is simply looking at a screen, which presents a three dimensional image. Based on experimentation, the effect is similar but superior to looking at a hologram. Video games, computer graphic displays, entertainment television and small screen slide projection and motion pictures are applications for this embodiment of the concept.

In the application in which each beholder has his own viewer, the viewer means comprises a device structured to be mounted, for example, on the backs of the seats in an auditorium in a position for the occupants of the seats immediately behind to look through toward the screen. Desirably, the devices are mounted for orthogonal adjustment, that is, laterally parallel to the line of seats, forwardly and rearwardly with respect to the occupants of the seats and vertically with respect to the level of the eyes of the occupants according to their height. Additionally, the devices are rotatable about their horizontal axes to take care of the inclination of the seats in an auditorium. The device comprises an elongate, rectangular frame mounted with its longitudinal axis transverse to the line of sight upon a supporting arm which will provide the aforesaid orthogonal and rotary movement. The frame, in turn, supports shutter means in the form of a travelling, vertically-positioned slit of predetermined width movable transversely of the line of sight at a rate which is synchronized with the frequency of the projected images. Specifically, the shutter comprises an endless belt supported on spaced, parallel, vertically-positioned spindles carried by the frame containing an opening defining a window through which the observer can look toward the screen and opposite the window and symmetrically located with respect to the ends of the window, a narrow, vertically-positioned slot. The spindles are rotated by suitable means to cause the course of the belt containing the slot to travel from left to right and the course of the belt containing the window to travel from right to left and at a rate such that the movement of the slot is synchronized with the frequency of the images projected on the screen.

It is understood that the example of a mechanical slit periodically moving from left to right is only to illustrate the concept. Left to right periodic movement of oscillating movement is equally feasible so long as the movement of the slit is coordinated with the movement of the images. Further, any device, whether mechanical, optical, electro-optical, or the like which masks the screen in such a way as to create the effect of a moving slit is within the scope of this invention.

In the application in which several beholders share a common screen, the viewer is combined with the screen so that, to all appearances, the viewer is an integral part of the screen and no other viewing aid is required by the beholder. Specifically, the viewer comprises a diffusion screen, two masks one on each side of the screen containing a plurality of vertically-oriented, spaced, parallel slits between which there are opaque areas and there is means for projecting at least two views of the same image from different perspectives on the screen. The slits and projectors are so arranged that one of the beholder's eyes sees one view through the slits and the other eye sees the other view because of the parallax caused by the interocular separation of the beholder's eyes. There is means for oscillating the viewer a horizontal distance no less than the distance between slits. During a complete oscillation cycle, the motion of the aggregate of all the slits "paints over" the entire screen area presenting each of the beholder's eyes with a complete image. The oscillation cycle rate is at a rate exceeding the capacity of the eye to perceive the scanning process, and the overall effect is that it presents simultaneously a complete but different picture to each of the beholder's eyes. Since each picture is from a slightly different perspective, the beholder perceives a three-dimensional image of the original scene.

The means for projecting the images on the screen is one form may be motion picture projectors. Optionally, the masks may comprise arrays of prismatic or lenticular lenses providing optical paths of greater width than the slits, hence, providing for higher light transmission and brighter pictures. A cathode ray tube may be substituted for the screen and motion picture projectors and, when this is the case, a single mask is employed positioned close to and parallel to the face of the tube and there is means provided for oscillating the mask in consonance with the oscillation of the tube electronics.

The invention will now be described in greater detail with reference to the accompanying drawings, wherein:

Fig. 1 illustrates, respectively, a projection screen, a projection booth for projecting images on the screen, rows of theatre seats facing the screen and viewing devices mounted on the backs of the seats of the rows of seats in positions to enable the theatre patron to look through the viewers toward the screen;

Fig. 2 is a plan view illustrating the relative position of the screen, the viewing device and the eyes of a patron;

Fig. 3 is a fragmentary horizontal section through a portion of the shutter of the viewing device showing the separate fields of view obtained with the aid of the device;

Fig. 4 is a perspective view of the device and its mounting to provide for orthogonal movement and rotation about a horizontal axis;

Fig. 5 is a plan view of a camera system embodying four film strips to record four perspective views;

Fig. 6 is an elevation of the system shown in Fig. 5;

Fig. 7 illustrates the use of four perspective views projected in sequence;

Figs. 8a, b, c, d, e and f show lap sequencing the four perspective views;

Fig. 9a, b, c, and d show lap sequencing in combination with the moving slit;

Figs. 10a and b show lap sequencing as opposed to serial sequencing;

Fig. 11 shows the shutter means in perspective;

Figs. 12a, b, c and d show the successive positions of the window and slit as the shutter travels tansversely of the line of sight;

Fig. 13 diagrammatically illustrates the use of the viewer with a video system;

Figs. 14a and b diagrammatically illustrate a perspective arrangement of the viewer with a television tube;

Fig. 15 is a plan view of an integral screen viewer wherein the screen and viewer are combined for motion picture projection;

Fig. 16 is a plan view of an integral screen and viewer wherein a cathode ray tube is used in lieu of motion picture projectors;

Fig. 16a diagrammatically illustrates a screen and cathode ray tube with means for oscillating the screen and tube electronics in consonance;

Fig. 16b is a fragmentary view illustrating a portion of the cathode ray tube and slitted mask showing the image strips on the cathode ray tube;

Fig. 17 is a plan view of an adaptation of the integral screen concept for a cathode tube system designed to transmit two images simultaneously;

Fig. 18 is a plan view of an adaptation of the integral screen concept to allow two beholders to see different views simultaneously;

Fig. 19 is a partial plan view of a lenticular mask system; and

Fig. 20 shows a projection system adapted to X—Y perspective projection.

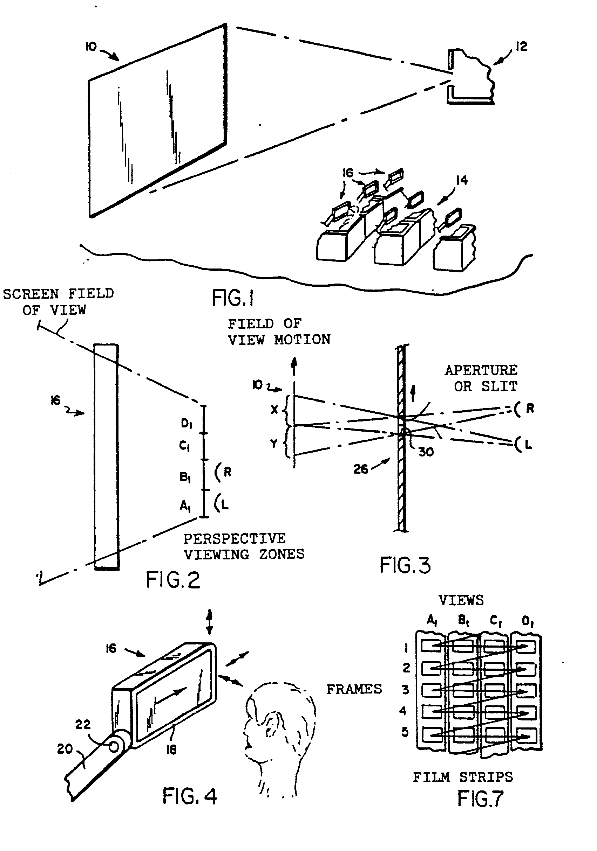

Referring to the drawings, Fig. 1, there is shown in perspective a projection screen 10, a projection booth 12, rows of seats 14 facing the projection screen and viewing devices 16 supported at the rear sides of each row of seats for the use of persons sitting in the row of seats therebehind.

Each viewing device 16, as shown in Fig. 4, comprises an elongate rectangular frame 18 mounted with its longitudinal axis transverse to the line of sight, that is, parallel to the plane of the projection screen, on a supporting system in the form of an arm 20, the latter providing for orthogonal movement in a direction transversely of the viewer, in a direction toward and from the viewer and in a vertical direction as indicated by the several arrows. Additionally, the device is mounted to the supporting system on a horizontal pin 22 to enable rotation about a horizontal axis to compensate for the inclination of the theatre seats which generally incline from front to back.

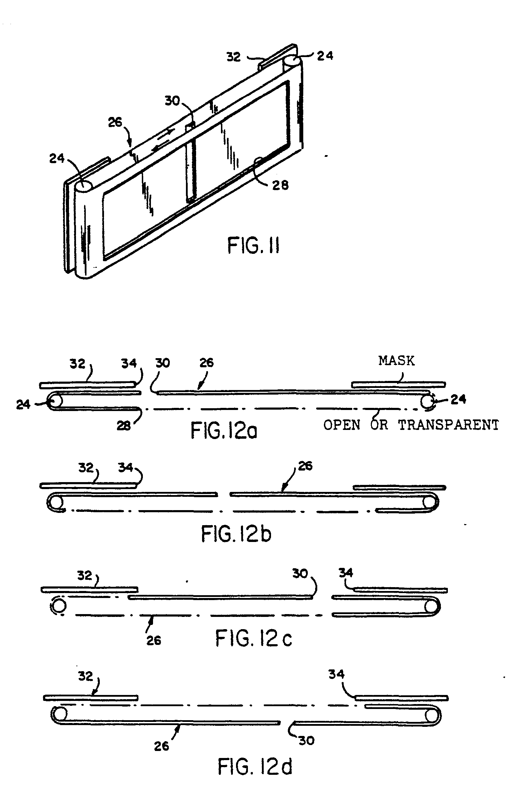

Within the frame, Fig. 11, there are mounted transversely-spaced, vertically-positioned spindles 24—24, one or both of which is driven by means not shown, upon which there is mounted a shutter device 26 in the form of a continuous belt provided with a window opening 28 of rectangular configuration and a slit opening 30 of predetermined width positioned vertically. The slit 30 is positioned midway between the opposite ends of the window opening 28. The belt is mounted on the spindles behind a mask plate 32 containing an opening 34.

The function of the viewer 16 is illustrated in Figs. 12a, b, c and d, wherein 12a show the slot 30 at the left-hand side of the opening 34. In this position, the window opening 28 permits a view of the screen through the slit 30 at the left-hand side of the opening 34. As the viewing device moves from left to right, the slit 30 travelling from left to right scans the screen so that a beholder looking through the window sees successive narrow areas of the screen. Fig. 12c shows the slit 30 at the right-hand side of the opening 34 and Fig. 12d shows the slit 30 travelling from right to left while the screen is dark.

The spindle or spindles 24 are driven at a rate such as to move the slit 30 in synchronism with the frequency of projection of the images on the screen at a rate of approximately 24 m/s (80 feet per second) which suffices to alternately expose and block the sight of the viewer at such a rate as to afford the impression that he is seeing the successive offset views simultaneously, thus producing the stereoscopic effect desired.

Fig. 2 diagrammatically illustrates the line of sight of a beholder's eye with respect to the viewing device and the screen, wherein L and R represent the left and right eyes of the beholder and $A_1$, $B_1$, $C_1$ and $D_1$ represent perspective viewing zones. The possible perspective combinations of such a system are:

Eye       R—View       $A_1$—eye L—    ——    —(Monocular)
Eye R—View $B_1$—Eye L—View $A_1$—(Stereo)
Eye R—View $C_1$—Eye L—View $B_1$—(Stereo)
Eye R—View $D_1$—Eye L—View $C_1$—(Stereo)
Eye      R—    ——    —Eye      L—View $D_1$—(Monocular)

Fig. 3 diagrammatically illustrates the moving slit 30 of the viewing device with respect to the eyes of the beholder represented at L and R. It will be observed that, as the slit moves transversely of the viewer, the left-hand eye of the beholder is restricted to a field of view represented at X and the right-hand eye is limited to a field of view represented at Y.

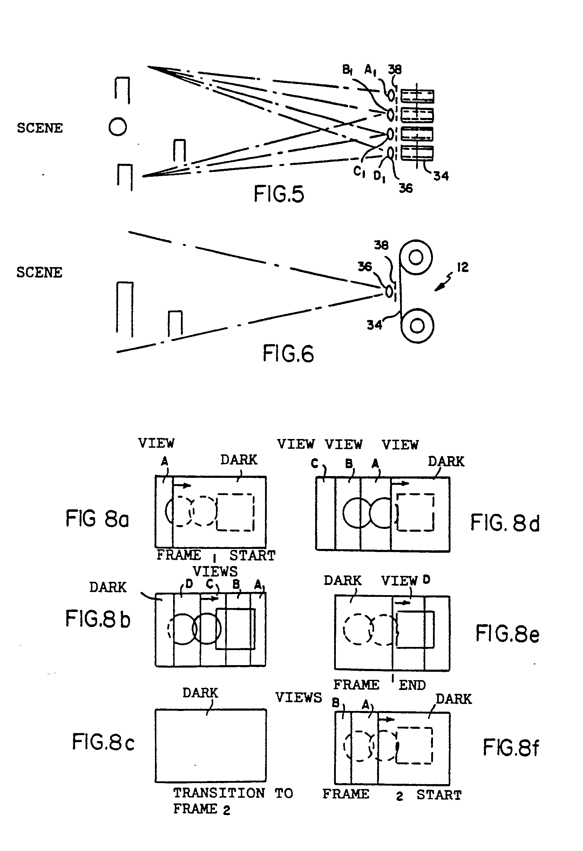

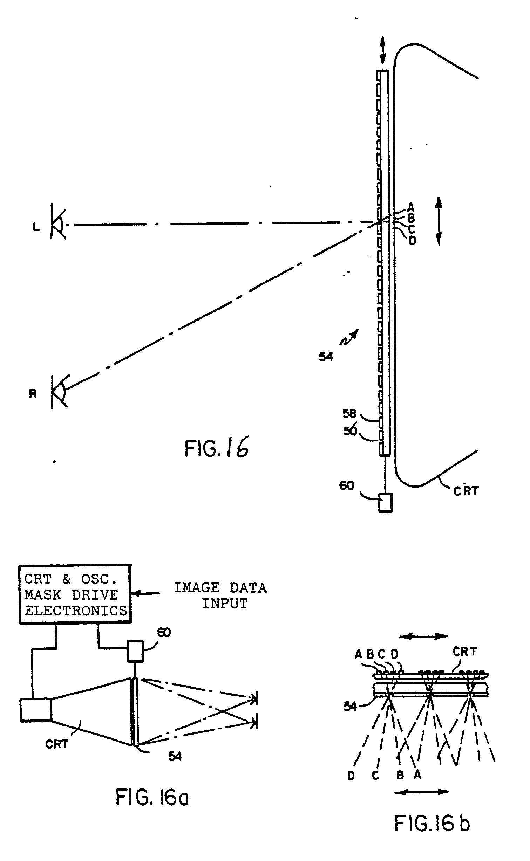

It is desirable to provide projection of a plurality of images, that is, different perspective views of the same scene in combination with the travelling slit described above. To this end, as shown in Figs. 5 and 6, four film strips 34 are used in conjunction with four lenses 36 and four shutters 38. Each film strip records a separate perspective view of the same scene. In this four view system, for example, the four perspective views of a motion frame are projected in sequence and then the motion frame advances and the next four frames are projected in sequence. This pattern repeats at a rate of 30 motion frames per second or 120 frames total. The projection sequence is diagrammatically illustrated in Fig. 7. The projection sequence is:

| Frame | View |
| --- | --- |
| 1 | A |
| 1 | B |
| 1 | C |
| 1 | D |
| 2 | A |
| 2 | B |
| 2 | C |
| 2 | D |
| 3 | A |
| 3 | B |
| 3 | C |
| 3 | D |

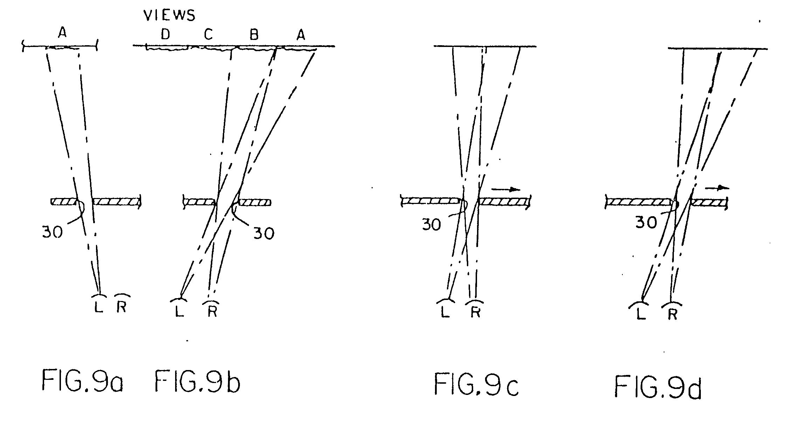

Under certain circumstances, it is desirable to shutter the projected images so as to lapse sequence the four perspective views as shown in Figs. 8a, b, c, d, e and f. The lapse sequencing in combination with the movable slit provides the combinations illustrated in Figs. 9a, b, c and d.

The stereo pair observed by the viewer is determined by the viewer's position, as illustrated in Figs. 9a, b, c and d. Figs. 9a and b show the case in which the viewer has positioned himself so that the motion of the slit 30 and the view set 10 cause his right eye to see view B and his left eye to see view A. Figs. 9c and d show the situation in which the observer has moved to the right. This change in viewpoint causes his right eye to see view C and his left eye to see view B. Since any adjacent set of views constitutes a stereo pair, a stereoscopic impression is received in both viewing positions. Further, the change in views received when moving between positions mimics the perspective change with head movement which occurs when looking at a solid object.

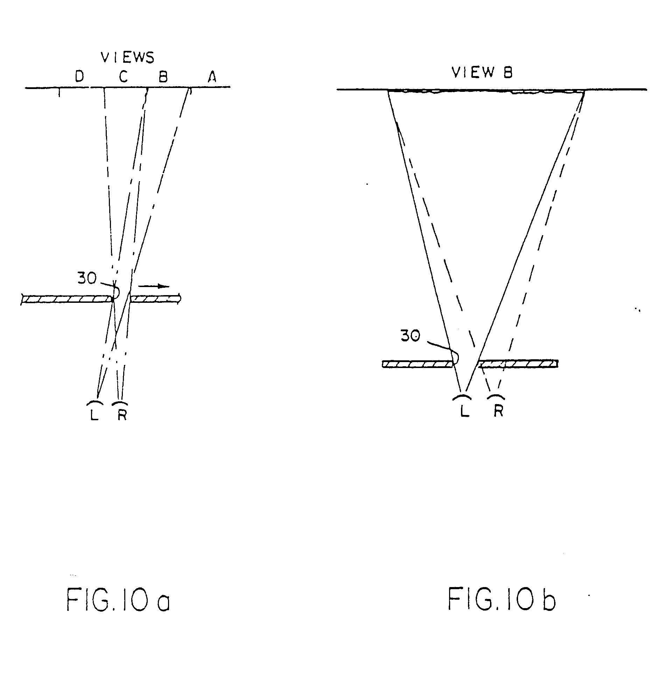

Presentation of the views as a series of lapse sequence stripes rather than as a sequence of full frames allows the viewing slit 30 to be further from the observer, as illustrated in Figs. 10a and b. In Fig. 10a a different perspective image is painted upon the retina of each eye simultaneously. The high speed, about 30 scans per second, assures that persistence of vision will provide the illusion of an entire image. The observer will, therefore, not be aware of the scanning. Proper choice of the width and velocity of the slit 30 and the image stripes in the view set 10 allows the slit to be positioned closer to or farther away from the viewer. This flexibility allows the moving slit device to be placed at a comfortable distance. The use of sequential full frames, as illustrated in Fig. 10b, requires that the slit 30 be positioned as shown. The left eye must be able to see all of view B at one instant, while the right eye is totally blocked. Similarly, the right eye must have a complete view of view C a short time later while the left eye is blocked. For an image of normal angular width, this requires that the slit 30 be quite close to the viewers eyes. Known stereoscopic systems which use alternately shuttered goggles have this general arrangement.

The lapse sequencing as opposed to serial sequencing in which the perspective view changes simultaneously over the entire screen, allows the viewer to be positioned further from the viewer's face as illustrated in Figs. 10a and b which would be a major factor in creating audience comfort and acceptance.

With each eye of the observer, a perspective view of the image is painted onto the retina by a vertical bar of light which scans across horizontally. The high speed, about 30 scans per second, assures that persistence of vision will provide the illusion of an entire image. The observer will, therefore, not be aware of the scanning.

The basic technical idea is to coordinate a horizontally moving slit in front of the viewer with the horizontally changing lapse sequencing of perspecpive views on the screen so that each eye of the viewer sees a slightly different perspective, thereby providing a three-dimensional illusion. The unique aspects of the system include (1) the capacity to project a number of perspective views which the observer can access by moving his head, thus giving the effect of being able to see around objects; (2) freedom from glasses or goggles (the lapse sequencing feature makes possible that the viewer can be positioned well in front of the user), avoiding a cramped feeling and preserving a theatrical ambience, a characteristic also valuable for three-dimensional video displays or games in which the user looks into the equipment through such a device which would replace the protective glass window typical of such equipment; and (3) the possibility of arranging the transitions between successive views so that the illusion of a continuous perspective change is induced. Experimental results show that this can, in fact, be achieved with the proper selection of perspective changes between views. If this is not achieved, the user will have to select comfortable positions wherein neither eye is viewing a transition. This is analogous to selecting a comfortable position to look through a picket fence with both eyes, although the effect is expected to be less extreme.

Overall, the concept is felt to provide a major advance over conventional stereo and, in many ways, equals or exceeds the capabilities of holograms. In particular, natural light can be used to take the pictures where laser illumination is required for holograms. This makes possible general outdoor filming as well as studio work.

The viewing device 16 is applicable to video games, data displays and similar applications and to still pictures as well as motion pictures.

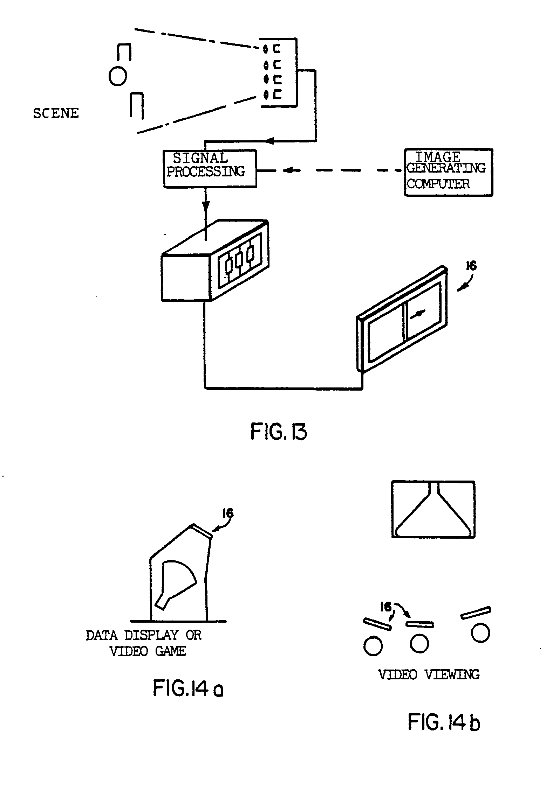

The video application using a single slit viewer 16, like the theatrical application, requires a horizontally moving lapse sequence of successive perspective views with a synchronized shutter. Live action video uses a multi-lens video camera analogous to a multi-lens film camera to capture the scene. The major difference between these cameras and conventional cameras is that the scan is vertical. The images of the multi-video cameras are combined electronically to form the lap dissolve image sequences, Fig. 13, on the cathode ray screen. The vertical scan is required to facilitate the lap dissolve sequence at a reasonable video rate.

Fig. 13 diagrammatically illustrates the three-dimensional image projection for non-theatrical applications wherein video games and data displays replace the camera. Fig. 14a diagrammatically illustrates data display and video game application and Fig. 14b diagrammatically illustrates general video viewing.

Still pictures can be projected in exactly the same way as motion pictures except that the same perspective views are lap sequenced over and over rather than once per action frame. Still pictures can be taken with a multi-lens camera or by a sequence of exposures from various perspectives with a single camera.

The stereoscopic effect achieved by means of the viewer described above which is adapted specifically for individual use in theatres where the subject matter of stereoscopic projection is projected onto a theatre screen can be achieved for use by several beholders on a common screen by combining the screen and viewer.

An embodiment of this concept which has been reduced to practice in film media form and which could have broad application because of its implicity employs a multi-slit oscillating viewer less than 25 mm away from the image screen. To all appearances, the viewer is an integral part of the screen, and no other viewing aid is needed by the beholder.

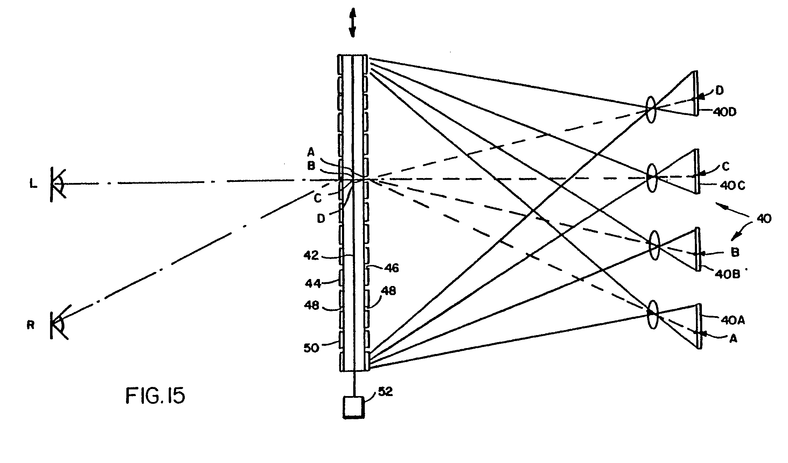

Fig. 15 shows a plan view of this embodiment adapted to project film images. A number of projectors 40, in this case four 40a, 40b, 40c and 40d, are arranged to superimpose four film images A, B, C and D on the rear side of a projection screen 42. The beholder observes the image from the opposite side of the screen. Two substantially identical masks 44, 46 are positioned parallel to the imaging surface of the diffusion screen 42, one on each side. Each mask 44, 46 contains a large number of narrow, vertical, light-transmitting slits 48 between which there are opaque areas 50. The screen and mask are connected to an oscillating mechanism 52 which moves them as a unit horizontally in a cyclical stroke of about two slit spacings. The oscillation frequency is preferably above the visual flicker frequency, for example, 25 to 30 cycles per second. As depicted, the right eye R of the beholder will see the image *a* on the screen corresponding to the image spot A of the projector 40 and the left eye will see an image *b* on the screen corresponding to the image spot B of the projector 40c.

The film images A, B, C and D are recorded from camera positions far right, middle right, middle left, and far left, respectively, thus providing a succession of perspective views of the same scene. The overall function of the system shown is to recreate and present the succession of views to the beholder such that each eye of the beholder sees a perspective image of the original scene appropriate to the position of the eye. In the example of Fig. 15, the beholder's right eye R sees image A and his left eye L sees image C. As the beholder moves, his eyes pick up different views such that the apparent perspective changes in the same way as it would in observing the original scene. With four views as shown, the transitions between views can often be perceived by the beholder. As the number of views increases and the difference in perspective between adjacent views decreases, the variations in perspective as a function of the beholder's viewing position begins to be perceived as continuous. Experiments with eight views taken on 25.4 mm (one inch) camera position increments demonstrate a good illusion of continuous perspective change.

Fig. 16 shows a plan view of the integral screen concept embodiment applied to a video image. A single mechanical scanning mask 54 containing a plurality of narrow slits 56 between which there are opaque areas 58 is placed parallel to the front face of a cathode ray tube CRT and oscillated by means 60, Fig. 16A. The cathode ray tube CRT is operated such that the vertical image stripes A, B, C and D are formed which are analogous to the projected images A, B, C and D in the film media application. These stripes are electronically scanned in unison with the mechanical motion of the mask so that they maintain a constant position relative to the mask slits. As the stripes move, their image content changes such that in each scanning cycle, the set of "A" stripes in combination paint a complete image of view A, the "B" stripes a complete image of view B, and so on. As in the film media application, each image stripe (A, B, C, D) is an image of the original object from four view points spaced from left to right. As depicted in Fig. 16, the right eye R of the beholder sees the image stripe A and the left eye the image stripe C. Fig. 16a diagrammatically illustrates the system and as therein shown, an oscillator 60 drives the screen and the electronics of the cathode ray tube CRT. Fig. 16b diagrammatically shows the relation of the images A, B, C and D on the cathode ray tube to the slits 58 in the mask.

The video application is not limited to presenting three-dimensional views of real objects. Computer generated images can also be viewed. Potential uses include display of engineering computer aided designs, video games, and display of medical images or scientific data. In principle, any three-dimensional shape, whether abstract or real, can be made viewable by this system.

The integral screen concept can also be adapted to present two-view stereo to several beholders simultaneously, present totally different two or three-dimensional images to beholders in different viewing positions, or allow a single beholder to access different frames of information by head movement alone.

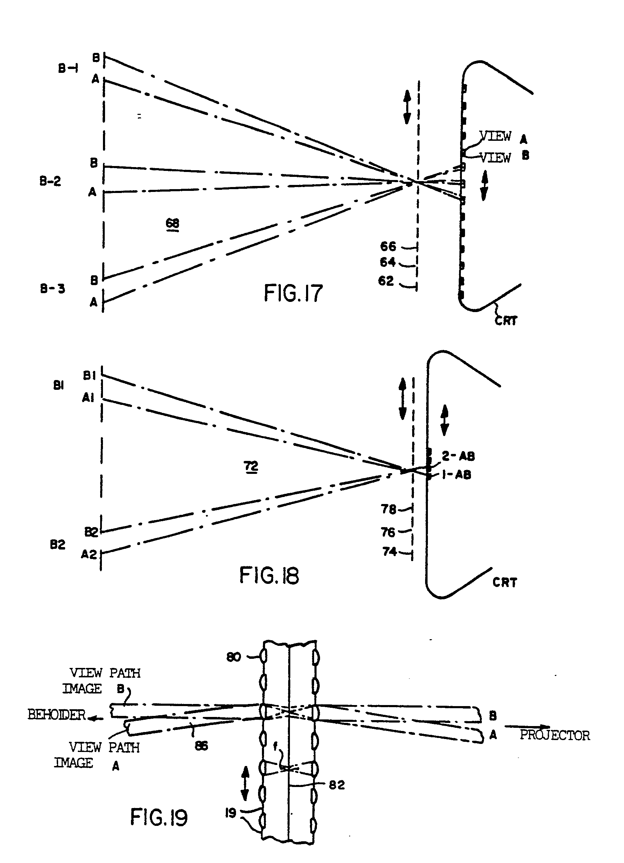

A substantial amount of still and motion picture material exists recorded in the form of stereo pair images, and equipment is available for photographing and processing this type of image. Further, the TV channel capacity exists, particularly in cable systems, to transmit two images A, B simultaneously. For this reason, an adaption of the integral screen concept as sketched in Fig. 17 could have practical use.

It consists of a mask 62 containing a plurality of slits 64 between which there are opaque areas 66 such that the beholders in more than one position represented at $B_1$, $B_2$ and $B_3$ can see the stereo images A, B on the screen. Dark zones 68 of at least one interocular spacing are desirable to prevent the beholder from seeing an inverted stereo image in which the right eye sees the left eye image and the left eye sees the right eye image. This condition tends to be annoying or disturbing to the beholder since the inverted stereo depth information conflicts with other visual depth clues and the beholder's visual system tries unsuccessfully to reconcile the inputs. In practice, the dark zones 68 should be as narrow as possible while avoiding inverted stereo effects, and the viewing zones should be distributed at a spacing comfortable for the beholders. In this way, an acceptable picture can be viewed everywhere but in the dark zones, and a stereo picture is viewed at the preferred zones where images A and B are adjacent. The scanning movement of the mask and image strips is accomplished as described with reference to Fig. 16a.

Fig. 18 shows a plan view of the integral screen system which allows two beholders $B_1$ and $B_2$ to each see a different stereo image simultaneously with a dark zone 72 between the images. Applications include two player video games in which each player is presented with a different field of view determined by his viewing position. As depicted, the cathode ray tube CRT provides images 1 and 2, each comprised of views A and B. The mask 74 contains slits 76 between which there are opaque areas 78. The scanning of the image strips is effected in the same manner as described with reference to Fig. 16a.

In a more general sense, the class of devices envisioned by this concept can present images which change as a function of the beholder's eye position. Applications include data display systems in which the beholder can select which data page to observe by a small head movement alone.

The above concept variations and special adaptations have been illustrated with sketches of a video based system. They are equally possible with film media.

High wattage projection lamps (300 watts per view for a 25.4×38.1 cm screen in the experimental model) are required to achieve adequate image brightness in the integral screen concept shown in Fig. 15, since over 90 percent of the light is lost in the opaque portions of the slit mask. Fig. 19 shows a partial plan view of an integral screen concept wherein a mask of lenticular design is employed, one at each side of the screen 82, in place of the slits in the mask shown in Fig. 15 to reduce the light loss and make possible lower power projectors or large screens at the same power level.

The prismatic or lenticular lenses provide image paths 86 of substantially greater width than the slits. The lenses thus pass more of the projection light to the screen than the slits, while concentrating the light such that a narrow stripe is formed which does not substantially overlap adjacent stripes. The same image detail is contained in the narrow stripe as would be projected onto the screen layer if the prismatic lens were replaced by a slit of the same width. It is, however, compressed anamorphically into the narrow stripe by the projection side prismatic lens. It is important to note that focal point F of the projection side prismatic lenses is greater than the distance from the lens to the screen. If the focal point were in the plane of the screen, the detail would be lost, or if the focal length were less than the distance to the plane of the screen, the image of the stripe would be inverted. The prismatic lenses at the beholder's side serve to enlarge the compressed image to normal proportions for the beholder. The net effect is essentially the same as with the slit, but with higher light transmission efficiency. The prismatic mask and screen are oscillated in unison as before in order to present each eye of the beholder with a different image as a function of eye position. While a larger area of the screen will show image than with the slit masks when there is no oscillation, oscillation is still desirable to scan a smooth "seamless" image onto the beholder's retina.

Attention to design detail is required to assure good image quality. Poor resolution in the prismatic lenses or diffusion layer will result in non-recoverable loss of detail in the compressed image stripes. Similarly, excessive compression and re-expansion will cause loss of detail.

In theory, the presence of the cylindrical prismatic lenses requires a cylindrical correcting lens on each projector rotated 90° from the lenses in the screen. For most applications, particularly in which the projector focal length is very long compared to that of the prismatic lenses in the screen, this may not, in fact, be necessary.

For mechanical reasons, the velocity of the oscillating screens utilized in this invention may not be constant, resulting in variations of image brightness across the image field. Specifically, the slow portions of the cycle cause higher apparent brightness than the fast portions. The correction for this is to modulate the brightness of the light source in unison with the oscillation to achieve constant effective brightness. Means for doing this include shutters, variable density filters, and electric control of the light source intensity.

In all instances, the image light intensity is modulated in synchronism with the oscillating screen motion to achieve constant effective brightness from the beholder's viewpoint.

The projection system presented so far has been X-array. The beholder's point of view changes in perspective with movement in the horizontal plane, but is constant with respect to movement in the vertical direction. This is expected to be adequate for most practical applications, but it is possible to apply this invention in such a way that horizontal and vertical perspective changes are both recorded and presented.

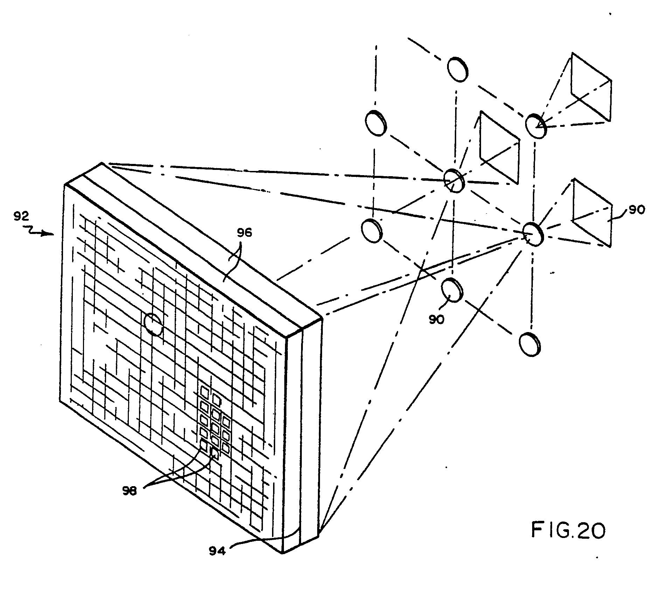

Fig. 20 shows a projection system adapted to X—Y perspective presentation. Nine projection lenses 90 in X—Y array project nine images on the back of an integral viewer-screen 92. The viewing screen has a diffusion layer 94 at the center and arrays 96 of spherical lenses 98 at the front and back surfaces. The lenses 98 are in register front to rear and have focal lengths longer than the distance from their optical centers to the diffusion layer 88. The transparent working areas of the lenses may be separated by opaque areas up to a width equal to the lens opening. The viewer-screen 92 is gyrated in a circular pattern so that the lens openings scan over the entire viewing area.

The integral X—Y screen function is very similar to that of the lenticular integral screen in Fig. 19. The spherical lenses on the projector side compress the image from each of the projection lenses into a small square on the diffusion layer. In the example illustrated, there are nine adjacent compressed images in a 3×3 pattern associated with each of the lenses in the array. The lenses in the matching array on the beholder side select the appropriate image as a function of the beholder's viewpoint and decompress it, and the scanning motion of the screen paints the image over the entire viewing area. The net effect is that perspective changes in a natural manner with motion of the beholder anywhere in the viewing region of the screen.

The film images of the original scene must be taken with the camera viewpoint varied in both the X and Y position. A minimum of four images in a 2×2 array are required for this concept variation. Based on experimentation with X-array systems, and 8×8 array of 64 images would give good results. In theory, this approach could also be accomplished with video, but, in practice, the amount of information capacity required is expected to be excessive except under special circumstances.

The concept embodied in the structure described in broad terms combines:

a) Information describing two or more views of an object (real or synthetic) in the form of film images, electronic data, or the like. Virtually any method capable of presenting a beholder with a picture is a candidate for the information recording, storage, and transmission.

b) Means such as optical projectors or cathode ray tubes for converting the image information into light viewable by the beholder.

c) An optical device or array of devices using parallax to channel the light such that the information received by the beholder's eye is a function of the spatial position of the eye with respect to the optical device.

d) A scanning mechanism to manipulate the parallax devices such that the full field of view is presented to the beholder. The scan rate is rapid enough to provide the illusion of a continuous picture. Mechanical or optoelectronic mechanisms are feasible means.

e) A means to coordinate the information converted to viewable form with the cycle of the scanning mechanism such that the beholder sees a complete and coherent image.

It should be understood that the present disclosure is for the purpose of illustration only and includes all modifications or improvements which fall within the scope of the appended claims.

**Claims**

1. A system of three-dimensional projection comprising a viewer (16) embodying an opaque mask (26) containing a vertically-positioned aperture (30), a screen (10) upon which is projected at least two vertically-oriented images of the same scene from different perspectives, and means (24) for effecting movement of the opaque mask (26) transversely relative to the focal plane of the image to traverse the aperture (30) transversely first in one direction and then in the other such that from a given vantage point, each of the beholder's eyes sees a different perspective view, each of which is formed by scanning motion rapid enough to provide the illusion of an image continuous in both time and space.

2. A system according to claim 1 for use in theatres comprising a plurality of viewers (16) and a common screen (10), said viewers (16) being provided in correspondence with the number of seats (14) for individual participation of the occupants of the seats.

3. A system according to claim 2 comprising means (20, 22) mounting the viewers (16) to the backs of the seats (14) such that the occupants of the seats behind the backs of the seats to which the viewers (16) are mounted have individual use of the viewers (16).

4. A system according to claim 3 wherein the means (20, 22) for mounting the viewers (16) provides for orthogonal movement of the viewers (16).

5. A system according to claim 1 wherein the viewer (16) comprises an endless belt (26) supported on spaced, parallel spindles (24) with the courses of the belt (26) between spindles (24) parallel to each other and to the plane of the screen (10), wherein the belt (26) contains a substantially rectangular elongate opening (28) positioned lengthwise of the belt (26) and a relatively narrow, vertically-oriented slit (30) located between the ends of the opening (28) and wherein the belt (26) is driven to traverse the slit (30) transversely of the screen (10) from left to right and from right to left.

6. A system according to claim 1 wherein the means for producing the images is the screen of a cathode ray tube, or comprises two or more motion picture projectors.

7. A system for three-dimensional projection comprising a viewer embodying two opaque masks (44, 46) and a diffusion screen (42) placed therebetween, said masks (44, 46) containing transversely-spaced, vertically-disposed see-through slits (48) between which there are opaque areas (50), the width of the slits (48) being less than the width of the opaque areas (50) therebetween, means (40) for producing at least two successive vertically-oriented views of the same image from different perspectives on the screen, and means (52) for oscillating said viewer no less than the distance between slits (48) such that from a given vantage point, each of the beholder's eyes sees a different perspective view, each of which is formed by scanning motion rapid enough to provide the illusion of an image continuous in both time and space.

8. Apparatus according to claim 7 wherein the means (40) for producing the views comprises motion picture projectors arranged to project the images through the slits (48) in the mask (44, 46), at one side of the screen (42) onto the screen (42).

9. A system according to claim 8 wherein the different views are located in the focal plane of the projectors (40).

10. A system for three-dimensional projecting comprising a viewer embodying two arrays of transversely-spaced optical transmitting lenses (80) with a diffusion screen (82) therebetween, the spaces between lenses (80) being opaque, means (40) spaced from the viewer for producing at least two vertically-oriented views of the same image from different perspectives, and means for moving the viewer in translation transversely in first one direction and then the opposite a distance greater than the width of the opaque space such that from a given vantage point, each of the beholder's eyes sees a different perspective view, each of which is formed by scanning motion rapid enough to provide the illusion of an image continuous in both time and space.

11. A system according to claim 10 wherein the focal plane of the projectors (40) is situated at the front side of the screen.

12. A system for three-dimensional projection comprising the screen of a cathode ray tube and a single mask (62; 74) positioned in spaced, parallel relation thereto containing a plurality of transversely-spaced, vertically-oriented slits (64; 76) and means for oscillating the mask and the electronics of the cathode ray tube in consonance wherein the electronics of the cathode ray tube provide a succession of vertically-oriented views of the same scene from different perspectives.

13. A system according to claim 12 wherein the electronics of the cathode ray tube provide two different images to two different beholders.

14. A system for three-dimensional projection comprising a viewer (92) embodying two arrangements of spherical lenses (98) with a diffusion screen (94) therebetween, the width of the light paths through said lenses (98) being greater than the width of the opaque areas between the lenses, means (90) for producing at least two successive vertically-oriented and two horizontally-oriented views of the same image from different perspectives on the screen (94) and means for oscillating the viewer (92) no less than the distance between light paths such that from a given vantage point, each of the beholder's eyes sees a different perspective view, each of which is formed by scanning motion rapid enough to provide the illusion of an image continuous in both time and space.

15. A system of three-dimensional projection comprising in combination a screen (42) and a viewer, said viewer embodying a mask (54; 62; 74) containing see-through slits (56; 64; 76), means for projecting at least two vertically-oriented images of the same scene from different perspectives on the screen and means (60) for effecting movement of the viewer to traverse the mask (54; 62; 74) from left to right and from right to left such that from a given vantage point, each of the beholder's eyes sees a different perspective view, each of which is formed by the scanning motion of the screen at a rate such as to provide the illusion of an image continuous in both time and space.

16. A system according to claims 8, 11 or 12, wherein the image light intensity is modulated in synchronism with the oscillating screen motion to achieve constant effective brightness from the beholder's viewpoint.

**Patentansprüche**

1. System zur dreidimensionalen Projektion mit einem Betrachter (16), der eine undurchsichtige Maske (26) mit einer senkrecht angeordneten Öffnung (30) aufweist, einem Schirm (10), auf den mindestens zwei senkrecht angeordnete Bilder des gleichen Schauplatzes aus verschiedenen Perspektiven projiziert werden, und einer Einrichtung (24) zum Erzeugen einer Bewegung der undurchsichtigen Maske (26) quer relativ zu der Fokalebene des Bildes zum Verfahren der Öffnung (30) quer erste in eine Richtung und dann in die andere so, daß von einem gegebenen Aussichtspunkt aus jedes der Augen des Beschauers eine andere perspecktivische Ansicht sieht, von denen jede durch eine Abtastbewegung erzeugt wird, die schnell genug ist, damit die Illusion eines kontinuierlichen Bildes sowohl in Zeit als auch Raum erzeugt wird.

2. System nach Anspruch 1 zur Benutzung in Theatern mit einer Mehrzahl von Betrachtern (16) und einem gemeinsamen Schirm (10), wobei die Betrachter (16) entsprechend der Anzahl von Sitzen (14) zum individuellen Teilnehmen der Sitzinsassen vorgesehen sind.

3. System nach Anspruch 2, mit einer Einrichtung (20, 22), die die Betrachter (16) so an den Rücklehnen der Sitze (14) anbringt, daß die Sitzinsassen hinter den Rücklehnen der Sitze, an die die Betrachter (16) angebracht sind, die Betrachter (16) individuell bebutzen können.

4. System nach Anspruch 3, bei dem die Einrichtung (20, 22) zum Anbringen der Betrachter (16) eine senkrechte Bewegung der Betrachter (16) vorsieht.

5. System nach Anspruch 1, worin der Betrachter (16) einen Endlosriemen (26) aufweist, der auf in einem Abstand voneinander angebrachten, parallelen Spindeln (24) gelagert ist, wobei die Bahnen des Riemens (26) zwischen den Spindeln (24) parallel zueinander und zu der Ebene des Schirmes (10) sind, worin der Riemen (26) eine im wesentlichen rechteckige, längliche Öffnung (28), die längs des Riemens (26), und einen relativ schmalen, senkrecht angeordneten Schlitz (30), der zwischen den Enden der Öffnung (28) angeordnet ist, enthält, und worin der Riemen (26) zum Verfahren des Schlitzes (30) quer zu dem Schirm (10) von links nach rechts und von rechts nach links angetrieben wird.

6. System nach Anspruch 1, worin die Einrichtung zum Erzeugen der Bilder der Schirm einer Kathodenstrahlröhre ist oder zwei oder mehr Filmprojektoren aufweist.

7. System zur dreidimensionalen Projektion mit einem Betrachter, der zwei undurchsichtige Masken (44, 46) und einen dazwischen angeordneten Streuschirm (42) aufweist, wobei die Masken (44, 46) in einem Querabstand voneinander angeordnete, vertikal angebrachte, durchsichtige Schlitze (48) aufweisen, zwischen denen undurchsichtige Flächen (50) vorhanden sind, die Breite der Schlitze (48) geringer ist als die Breite der undurchsichtigen Flächen (50) dazwischen, einer Einrichtung (40) zum Erzeugen von mindestens zwei aufeinanderfolgenden, senkrecht angeordneten Ansichten des gleichen Bildes aus verschiedenen Perspektiven auf dem Schirm, und einer Einrichtung (52) zum Hin- und Herschwingen der Betrachter um nicht weniger als die Entfernung zwischen den Schlitzen (48) so, daß von einem gegebenen Aussichtspunkt jedes Auge des Beschauers eine unterschiedliche perspektivische Ansicht sieht, von denen jede durch eine Abtastbewegung erzeugt wird, die schnell genug ist, damit die Illusion eines kontinuierlichen Bildes sowohl in Zeit als auch Raum erzeugt wird.

8. Anlage nach Anspruch 7, worin die Einrichtung (40) zum Erzeugen der Ansichten Filmprojektoren aufweist, die zum Projizieren der Bilder durch die Schlitze (48) in der Maske (44, 46) auf einer Seite des Schirmes (42) auf den Schirm (42) angeordnet sind.

9. System nach Anspruch 8, worin die verschiedenen Ansichten in der Fokalebene der Projektoren (40) angeordnet sind.

10. System zur dreidimensionalen Projektion mit einem Betrachter, der zwei Reihen von in einem Querabstand voneinander angebrachten optisch durchlässigen Linsen (80) mit einem Streuschirm (82) dazwischen aufweist, wobei die Räme zwischen den Linsen (80) undurchsichtig sind, einer Einrichtung (40) in einem Abstand von dem Betrachter zum Erzeugen von mindestens zwei senkrecht angeordneten Ansichten des gleichen Bildes aus verschiedenen Perspektiven, und einer Einrichtung zum Bewegen der Betrachter in Parallelverschiebung quer in zuerst eine Richtung und dann die entgegengesetzte um eine Entfernung, die größer ist als die Breite des undurchsichtigen Raumes so, daß von einem gegebenen Aussichtspunkt jedes Auge des Beschauers eine unterschiedliche perspektivische Ansicht, sieht, von denen jede durch eine Abtastbewegung erzeugt wird, die schnell genug ist, damit die Illusion eines kontinuierlichen Bildes sowohl in Zeit als auch Raum erzeugt wird.

11. System nach Anspruch 10, worin die Fokalebene der Projetoren (40) auf der Vorderseite des Schirmes angeordnet ist.

12. System zur dreidimensionalen Projektion mit dem Schirm einer Kathodenstrahlröhre und einer einzelnen Maske (62; 74), die in einem Abstand dazu und parallel relativ dazu angeordnet ist und eine Mehrzahl von in einem Querabstand angeordneten, senkrecht angebrachten Schlitzen (64; 76) aufweist, und einer Einrichtung zum Schwingen der Maske und der Elektronik der Kathodenstrahlröhre im Gleichklang, worin die Elektronik der Kathodenstrahlröhre eine Aufeinanderfolge von senkrecht angeordneten Ansichten des gleichen Schauplatzes aus verschiedenen Perspektiven vorsieht.

13. System nach Anspruch 12, worin die Elektronik der Kathodenstrahlröhre zwei verschiedene Bilder für zwei verschiedene Beschauer vorsieht.

14. System zur dreidimensionalen Projektion mit einem Betrachter (92), der zwei Anordnungen von spärischen Linsen (98) mit einem Streuschirm (94) dazwischen aufweist, wobei die Breite des Lichtweges zwischen den Linsen (98) größer als die Breite der undurchsichtigen Flächen zwischen den Linsen ist, einer Einrichtung (90) zum Erzeugen von mindestens zwei aufeinanderfolgenden, senkrecht angeordneten und zwei horizontal angeordneten Ansichten des gleichen Bildes aus verschiedenen Perspektiven auf dem Schirm (94) und einer Einrichtung zum Schwingen des Betrachters (92) um nicht weniger als den Abstand zwischen den Lichtwegen so, daß von einem gegebenen Aussichtspunkt jedes Auge des Beschauers eine unterschiedliche perspektivische Ansicht sieht, von denen jede durch eine Abtastbewegung erzeugt wird, die schnell genug ist, damit die Illusion eines kontinuierlichen Bildes sowohl in Zeit als auch Raum erzeugt wird.

15. System zur dreidimensionalen Projektion mit einer Kombination eines Schirmes (42) und eines Betrachters, wobei der Betrachter eine Maske (54; 62; 74) mit durchsichtigen Schlitzen (56; 64; 76) aufweist, einer Vorrichtung zum Projizieren von mindestens zwei senkrecht angeordneten Bildern desselben Schauplatzes aus unterschiedlichen Perspektiven auf den Schirm und einer Einrichtung (60) zum Bewirken einer Bewegung des Betrachters quer zu der Maske (54; 62; 74) von links nach rechts und von rechts nach links so, daß von einem gegebenen Aussichtspunkt jedes Auge des Beschauers eine unterschiedliche perspektivische Ansicht sieht, von denen jede durch die Abtastbewegung des Schirmes mit so einer Rate erzeugt wird, daß die Illusion eines kontinuierlichen Bildes sowohl in Zeit als auch Raum erzeugt wird.

16. System nach Ansprüche 8, 11 oder 12, worin die Bildlichtintensität synchron mit der schwingenden Schirmbewegung zum Erzielen einer konstanten effektiven Helligkeit von dem Gesichtspunkt des Beschauers aus moduliert wird.

**Revendications**

1. Système de projection en relief ou à trois dimensions, comprenant un appareil à visionner (16) incorporant une cache opaque (26) qui enferme un diaphragme (30) en position verticale, de plus comprenant un écran (10) sur lequel au moins deux images de la même scène dans des perspectives différentes sont projetées, et comprenant des moyens (24) pour un mouvement de la cache opaque (26) en travers du plan focal de l'image afin de traverser le diaphragme (30) en travers, au début dans une direction et çi-après dans l'autre direction, d'une manière que, d'un point de vue donné, chaque oeuil du spectateur voit une vue à perspective différente, chacune vue étant formée par un mouvement de balayage suffisamment rapide à créer l'illusion d'une image continue non seulement en temps mais aussi en espace.

2. Système selon la revendication 1 pour l'application dans des théâtres, comprenant une pluralité desdits appareils à visionner (16) et un écran commun (10), lesdits appareils à visionner (16) étant pourvus en correspondence avec le nombre des sièges (14) pour la participation individuelle des occupants desdites sièges.

3. Système selon la revendication 2, comprenant des moyens (20, 22) pour le montage desdits appareils à visionner (16) aux dossiers desdites sièges (14) d'une manière que les occupants des sièges derrière les dossiers desdites sièges auxquelles lesdits appareils à visionners (16) sont montés peuvent utiliser lesdits appareils à visionner (16) individuellement.

4. Système selon la revendication 3, dans lequel les moyens (20, 22) pour le montage lesdits appareils à visionner (16) permet le mouvement orthogonal desdits appareils à visionner (16).

5. Système selon la revendication 1, dans lequel ledit appareil à visionner (16) comprend une courroie sans fin (26) supportée sur des essieux (24) parallèles séparées, les brins de ladite courroie (26) étant en relation parallèle non seulement l'un à l'autre entre lesdites essieux (24) mais aussi au plan dudit écran (10), pendant que ladite courroie (26) est pourvue d'une ouverture allongée (28) essentiellement rectangulaire qui est positionnée en long de ladite courroie (26), ainsi qu'une fente (30) relativement étroite et en orientation verticale, qui se trouve entre les extrémités de ladite ouverture (28), et dans lequel système ladite courroie (26) est entrainée d'une façon de traverser ladite fente (30) en travers dudit écran (10) de la gauche à la droite et de la droite à la gauche.

6. Système selon la revendication 1, dans lequel lesdits moyens à créer des images sont constitués par l'écran d'un tube cathodique ou comprennent deux ou plus projecteurs ciné.

7. Système de projection en relief ou à trois dimensions, comprenant un appareil à visionner incorporant deux caches opaques (44, 46) et un écran de diffusion (42) placé entre lesdites caches qui (44, 46) comprennent des fentes de transmission (48) séparées en travers et arrangées verticalement, entre lesquelles fentes des zones opaques (50) sont pourvues, la largeur desdites fentes (48) étant plus étraite que la largeur desdites zones opaques (50) entre les fentes, le système comprenant de plus des moyens (40) pour la création d'au moins deux vues successives, en orientation verticale, de la même image aux perspectives differentes sur ledit écran, et comprenant en fin des moyens (52) pour faire osciller ledit appareil à visionner au moins par la distance entre ledites fentes (48) d'une manière que, d'un point de vue donné, chaque oeuil du spectateur voit une vue à perspective différente, chacune vue étant formée par un mouvement de balayage suffisamment rapide à créer l'illusion d'une image continue non seulement en temps mais aussi en espace.

8. Appareil selon la revendication 7, dans lequel lesdits moyens (40) pour la création des vues comprennent des projecteurs ciné disposés d'une façon que les images soient projetées sur l'écran (42), au travers desdites fentes (48) dans ladite cache (44, 46) d'un côté dudit écran (42).

9. Système selon la revendication 8, dans lequel lesdites vues différentes se trouvent dans le plan focal desdits projecteurs (40).

10. Système de projection en relief ou à trois dimensions, comprenant un appareil à visionner incorporant deux arrangements des lentilles optiques de transmission (80) séparées en travers, avec un écran de diffusion (82) entre lesdites lentilles, l'espaces entre les lentilles (80) étant opaques, et comprenant de plus des moyens (40) à distance du spectateur, pour la création d'au moins deux vues, en orientation verticale, de la même image, aux perspectives différentes, et comprenant des moyens pour traverser de l'appareil à visionner en travers, au début dans une direction et çi-après dans la direction opposée, par une distance plus grande que la largeur dudit espace opaque, d'une façon que, d'un point de vue donné, chaque oeuil du spectateur voit une vue à perspective différente, chacune vue étant formée par un mouvement de balayage suffisamment rapide à créer l'illusion d'une image continue non seulement en temps mais aussi en espace.

11. Système selon la revendication 10, dans lequel le plan focal des projecteurs (40) se trouve à la face dudit écran.

12. Système de projection en relief ou à trois dimensions, comprenant l'écran d'un tube cathodique et une seule cache (62; 74) positionnée en relation séparée et parallèle audit écran, et incorporant une pluralité des fentes (64, 76) séparées en travers et en orientation verticale, et des moyens pour faire osciller, en accord, ladite cache et le système électronique dudit tube cathodique, le système électronique dudit tube cathodique fournissant une suite des vues, en orientation verticale, de la même scène, aux perspectives différentes.

13. Système selon la revendication 12, dans lequel le système électronique dudit tube cathodique fournit deux images différentes à deux spectateurs différents.

14. Système de projection en relief ou à trois dimensions, comprenant un appareil à visionner (92) incorporant deux arrangements des lentilles sphériques (98) entre lesquelles se trouve un écran de diffusion (94), la largeur des trajectoires de la lumière en travers desdites lentilles (98) étant plus grande que la largeur des zones opaques entre ledites lentilles, et comprenant de plus des moyens (90) pour créer au moins deux vues successives en orientation verticale et deux vues en orientation horizontale de la même image, aux perspectives différentes, sur ledit écran (94), et comprenant des moyens pour faire osciller ledit appareil à visionner (92) par au moins la distance entre lesdites trajectoires de la lumière, d'une façon que, d'un point de vue donné, chaque oeuil du spectateur voit une vue à perspective différente, chacune vue étant formée par un mouvement de balayage suffisamment rapide à créer l'illusion d'une image continue non seulement en temps mais aussi en espace.

15. Système de projection en relief ou à trois dimensions comprenant une combinaison d'un écran (42) avec un appareil à visionner, ledit appareil à visionner incorporant une cache (54; 62; 74) pourvue des fentes de transmission (56; 64; 76), et comprenant de plus des moyens pour la projection d'au moins deux images en orientation verticale, de la même scène, aux perspectives différentes, sur l'écran, et comprenant des moyens (60) pour atteindre un mouvement dudit appareil à visionner afine de traverser ladite cache (54; 62; 74) de la gauche à la droite et de la droite à la gauche, d'une manière que, d'un point de vue donné, chaque oeuil du spectateur voit une vue à perspective différente, chacune vue étant formée par un mouvement de balayage suffisamment rapide à créer l'illusion d'une image continue non seulement en temps mais aussi en espace.

16. Système selon les revendications 8, 11 ou 12, dans lequel l'intensité lumineuse de l'image est modulée en synchronisation avec le mouvement oscillant dudit écran, afin d'atteindre une luminosité effective constante du point de vue de spectateur.

SCREEN FIELD OF VIEW

FIG.1

FIELD OF VIEW MOTION

APERTURE OR SLIT

FIG.2

PERSPECTIVE VIEWING ZONES

FIG.3

FIG.4

FRAMES

VIEWS

FILM STRIPS

FIG.7

1

SCENE

FIG.5

SCENE

FIG.6

VIEW                    VIEW VIEW VIEW
A          DARK        C    B    A       DARK

FIG 8a                                    FIG. 8d

FRAME | START

VIEWS
DARK    D  C  B  A₁     DARK   VIEW D

FIG.8 b                                    FIG.8e

FRAME | END

DARK            VIEWS  B₁  A₁      DARK

FIG.8c                                    FIG.8f

TRANSITION TO        FRAME    2  START
FRAME 2

FIG. *16*

FIG. 16a

FIG.16 b

VIEWS

A         D    C    B    A

30                    30

L   R          L   R

FIG.9a    FIG.9b          FIG.9c          FIG.9d

30                    30

L   R          L   R

0 114 406

FIG. 10 a

FIG. 10 b

FIG. II

FIG. 12a

OPEN OR TRANSPARENT

FIG. 12b

FIG. 12 c

FIG. 12 d

SCENE

SIGNAL PROCESSING

IMAGE GENERATING COMPUTER

16

FIG. 13

16

DATA DISPLAY OR VIDEO GAME

FIG. 14 a

16

VIDEO VIEWING

FIG. 14 b

FIG. 15

FIG.17

FIG.18

FIG.19

FIG.20